# EUROPÄISCHE PATENTSCHRIFT

(11) **EP 3 355 002 B1**
(45) Veröffentlichungstag und Bekanntmachung des Hinweises auf die Patenterteilung: **22.05.2019**
(21) Anmeldenummer: 17153311.0
(22) Anmeldetag: 26.01.2017
(51) Int. Cl.: F25B 15/04, F25B 37/00, F25B 25/02

(54) **SORPTIONSWÄRMEPUMPE UND SORPTIONSKREISPROZESS**
SORPTION HEAT PUMP AND SORPTION CIRCUIT PROCESS
POMPE À CHALEUR A ABSORPTION ET PROCÉDÉ DE CIRCUIT À ABSORPTION

(43) Veröffentlichungstag der Anmeldung: 01.08.2018
(73) Patentinhaber: AGO AG Energie + Anlagen, 95326 Kulmbach (DE)
(72) Erfinder: Ramming, Klaus, Dr., 95336 Mainleus (DE)
(74) Vertreter: Bauer, Dirk

(56) Entgegenhaltungen:
- WO-A1-88/09468
- DD-A1- 236 979
- DE-C1- 3 808 257
- US-A- 6 154 374

## Beschreibung

Die Erfindung betrifft zunächst eine Sorptionswärmepumpe mit gasförmigen Kältemittel und flüssigen Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung das Kältemittel absorbiert und dabei Wärme abgibt, einem Drosselventil, das die reiche Lösung nach Austritt aus dem Absorber entspannt, einem Austreiber, in dem die reiche Lösung nach Austritt aus dem Drosselventil der Sorptionswärmepumpe von außen zugeführte Wärme aufnimmt und dabei das Kältemittel austreibt, einem Verdichter, der das Kältemittel nach Austritt aus dem Austreiber zum Eintritt in den Absorber verdichtet, und einer Pumpe, die die arme Lösung nach Austritt aus dem Austreiber in den Absorber pumpt. Die Erfindung betrifft weiter einen Sorptionskreisprozess zum Betreiben einer solchen Sorptionswärmepumpe.

Solche Sorptionswärmepumpen und -kreisprozesse sind bekannt aus DD 236979 A1, CN 1240953 A1 und DE 3808257 C1. In den bekannten Sorptionswärmepumpen und -kreisprozessen wird ein mit der Ausgangstemperatur des im Absorber aufgeheizten Mediums steigender Anteil der in der reichen Lösung zur Verfügung stehenden Wärme nicht zum Austreiben des Kältemittels genutzt. Das Dokument WO 88/09468 A1 zeigt eine Sorptionswärmepumpe gemäß dem Obergebriff von Anspruch 1.

### Aufgabe

Der Erfindung liegt die Aufgabe zugrunde, die energetische Effizienz und die Ausgangstemperatur des im Absorber geheizten Mediums zu steigern.

### Lösung

Gemäß der vorliegenden Erfindung wird die obige Aufgabe durch die Merkmale von Anspruch 1 gelöst. Ausgehend von den bekannten Sorptionswärmepumpen und -kreisprozessen wird nach der Erfindung vorgeschlagen, einen zweiten Austreiber vorzusehen, in dem die reiche Lösung parallel zu dem Austreiber Wärme aus der reichen Lösung zwischen Absorber und Drosselventil aufnimmt. Die intern anfallende Wärme wird zur Erhöhung der Temperatur der reichen Lösung genutzt. So wird der Bedarf an von außen zugeführter Wärme vermindert und die energetische Effizienz gesteigert.

Vorzugsweise weist eine erfindungsgemäße Sorptionswärmepumpe einen Heißgaskühler auf, in dem die reiche Lösung parallel zu dem Austreiber Wärme aus dem Kältemittel zwischen Absorber und Drosselventil aufnimmt. Insbesondere bei einer zweistufigen Verdichtung des Kältemittels ist eine Zwischenkühlung erforderlich, damit die Heißgastemperatur nach dem zweiten Verdichter nicht zu hoch wird, was die üblichen Kälteverdichter nicht erlauben. Die Wärme aus dem Heißgaskühler kann bei dem Temperaturniveau intern und extern nicht sinnvoll in Form einer Medienerwärmung genutzt werden. So wird der Bedarf an von außen zugeführter Wärme weiter vermindert und die energetische Effizienz gesteigert.

Vorzugsweise weist eine erfindungsgemäße Sorptionswärmepumpe eine Rektifikationskolonne auf, in der das Kältemittel aus dem Austreiber aus der reichen Lösung zwischen Drosselventil und Austreiber zweites Kältemittel austreibt. So wird das im Austreiber zu erwärmende Volumen und damit der Bedarf an von außen zugeführter Wärme weiter vermindert und die energetische Effizienz gesteigert.

Vorzugsweise weist eine erfindungsgemäße Sorptionswärmepumpe einen Lösungswärmeübertrager auf, in dem die arme Lösung vor Eintritt in den Absorber Wärme aus der reichen Lösung zwischen Absorber und Drosselventil aufnimmt. Solche Lösungswärmeübertrager sind allgemein bekannt.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Ausgehend von dem bekannten Sorptionskreisprozess wird nach der Erfindung vorgeschlagen, dass die reiche Lösung parallel zu der von außen zugeführten Wärme Wärme aus der reichen Lösung zwischen dem Absorbieren des Kältemittels und dem Entspannen aufnimmt. Das erfindungsgemäße Verfahren wird mit einer der vorstehend beschriebenen Sorptionswärmepumpen ausgeführt und zeichnet sich gleichermaßen durch die dort aufgeführten Vorteile aus.

Vorzugsweise gibt die arme Lösung beim Absorbieren des Kältemittels die Wärme an Hochdruckheißwasser mit einer Zulauftemperatur oberhalb 100 °C ab. Die bekannten Sorptionswärmepumpen und -kreisprozesse erreichen mit Industriewärmepumpen keine Ausgangstemperatur des im Absorber geheizten Mediums über 100 °*C*. Weiter vorzugsweise liegt die Zulauftemperatur oberhalb 120 °C. Die bekannten Sorptionswärmepumpen und -kreisprozesse sind nicht mit Zulauftemperaturen oberhalb 120 °*C* nutzbar.

Vorzugsweise nimmt die entspannte reiche Lösung die Wärme aus Wasser mit einer Zulauftemperatur unterhalb 100 °C auf. Diese Anwendung von Sorptionswärmepumpen und -kreisprozessen ist allgemein bekannt.

### Ausführungsbeispiel

Die Erfindung wird nachfolgend anhand von Ausführungsbeispielen erläutert. Es zeigen
- Fig. 1: eine aus dem Stand der Technik bekannte Sorptionswärmepumpe,
- Fig. 2: eine erste erfindungsgemäße Sorptionswärmepumpe,
- Fig. 3: eine zweite erfindungsgemäße Sorptionswärmepumpe und
- Fig. 4: eine dritte erfindungsgemäße Sorptionswärmepumpe.

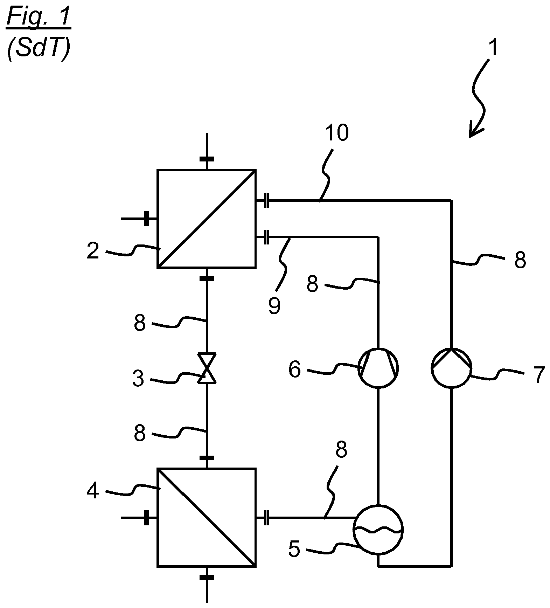

Die in Figur 1 gezeigte, aus dem Stand der Technik bekannte Sorptionswärmepumpe 1 weist einen Absorber 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem dazu parallel verlaufenden Lösungsmittelzweig 10 vom Abscheider 5 zum Absorber 2 angeordnet sind.

In einem Zyklus eines Sorptionskreisprozesses in der bekannten Sorptionswärmepumpe 1 gibt in dem Absorber 2 eine reiche Lösung von Ammoniak (NH₃) als Kältemittel in Wasser als Lösungsmittel auf einem Hochdruckniveau Wärme ab, wird in dem Drosselventil 3 auf ein Niederdruckniveau entspannt und nimmt in dem Austreiber 4 von außen zugeführte Wärme auf. Die derart entspannte, aufgeheizte reiche Lösung scheidet in dem Abscheider 5 gasförmiges Kältemittel ab, die verbleibende arme Lösung wird von der Pumpe 7 in den Absorber 2 gefördert. Parallel wird das abgeschiedene Kältemittel im Verdichter 6 auf das Hochdruckniveau verdichtet, dadurch weiter aufgeheizt und gleichfalls in den Absorber 2 gefördert.

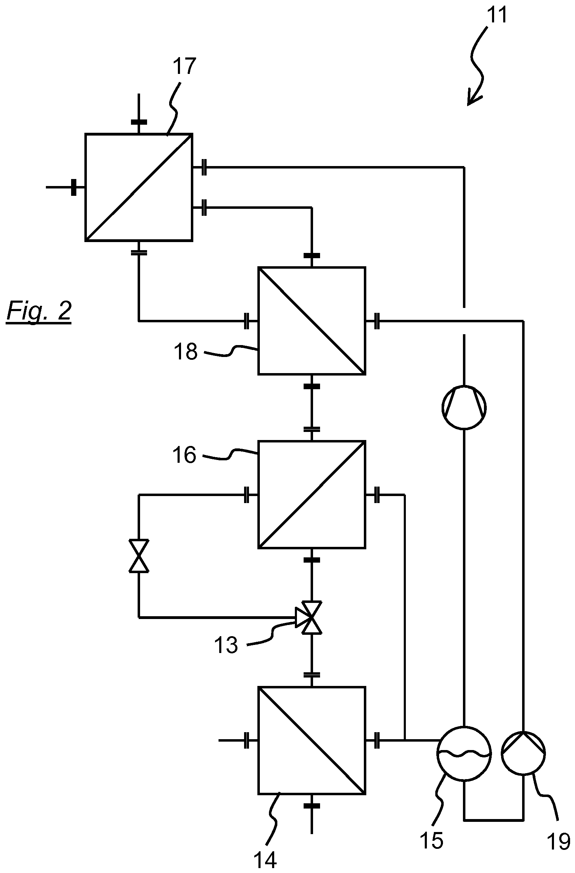

Die in Figur 2 dargestellte erste erfindungsgemäße Sorptionswärmepumpe 11 entspricht zunächst im Wesentlichen der aus dem Stand der Technik bekannten Sorptionswärmepumpe 1. Zusätzlich weist die erste Sorptionswärmepumpe 11 hinter dem Drosselventil 12 ein Verteilerventil 13 auf, das die reiche Lösung in zwei Ströme teilt: Während der erste Strom im Austreiber 14 die von außen zugeführte Wärme aufnimmt, um im Abscheider 15 das gasförmige Kältemittel abzuscheiden, nimmt der zweite Strom in einem zweiten Austreiber 16 Wärme aus der reichen Lösung zwischen Absorber 17 und Drosselventil 12 auf und wird in einem nicht dargestellten Mischventil vor dem Abscheider 15 wieder mit dem ersten Strom zusammengeführt. Weiterhin weist die erste Sorptionswärmepumpe 11 einen Lösungswärmeübertrager 18 auf, in dem die arme Lösung zwischen der Pumpe 19 und Absorber 17 Wärme aus der reichen Lösung zwischen Absorber 17 und Drosselventil 12 aufnimmt.

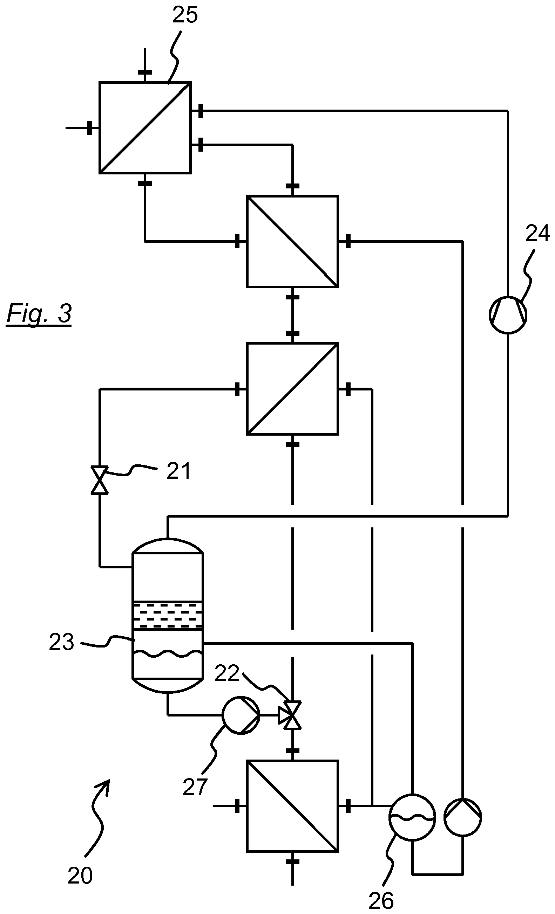

Die in Figur 3 dargestellte zweite erfindungsgemäße Sorptionswärmepumpe 20 entspricht zunächst im Wesentlichen der ersten Sorptionswärmepumpe 11.

Zusätzlich weist die zweite Sorptionswärmepumpe 20 zwischen dem Drosselventil 21 und dem Verteilerventil 22 eine Rektifikationskolonne 23 auf, in der die reiche Lösung ohne Zufuhr von Wärme von außen (zweites) gasförmiges Kältemittel abscheidet, das über den Verdichter 24 in den Absorber 25 geführt wird. Das (erste) Kältemittel aus dem Abscheider 26 wird gleichfalls in die Rektifikationskolonne 23 eingeleitet und so mit dem (zweiten) Kältemittel zusammengeführt. Aus der Rektifikationskolonne 23 wird anstelle der reichen die verarmte Lösung mit einer weiteren Pumpe 27 abgezogen, die den Flüssigkeitspegel in der Rektifikationskolonne 23 regelt.

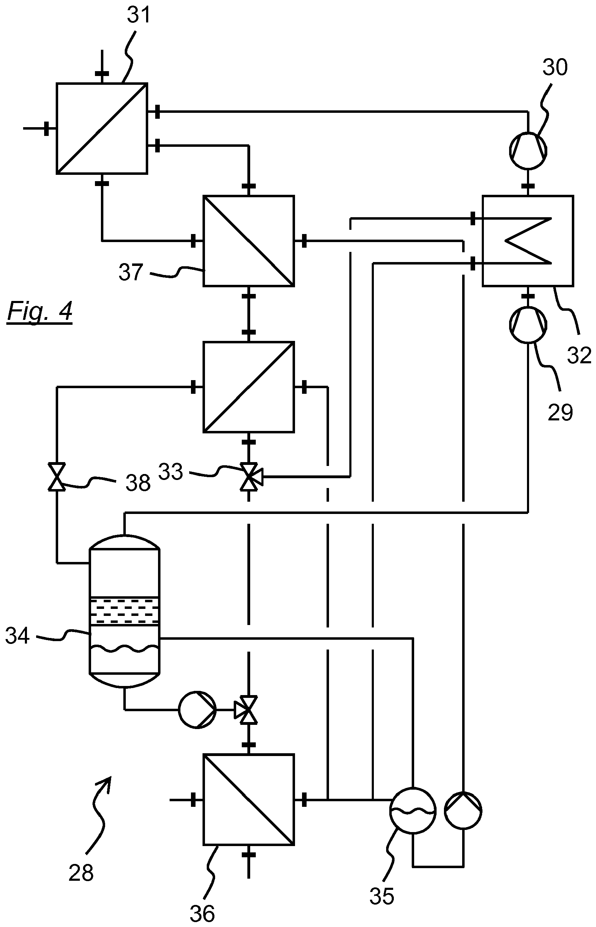

Die in Figur 4 dargestellte dritte erfindungsgemäße Sorptionswärmepumpe 28 entspricht zunächst im Wesentlichen der zweiten Sorptionswärmepumpe 20. Zusätzlich weist die dritte Sorptionswärmepumpe 28 hinter dem Verdichter 29 einen zweiten Verdichter 20 auf, der das Kältemittel vor dem Eintritt in den Absorber 31 von 9,5 *bar* auf das Hochdruckniveau von 22 *bar* weiter verdichtet und dabei zugleich auf 222 °*C* aufheizt. Zwischen dem ersten Verdichter 29 und dem zweiten Verdichter 20 weist die dritte Sorptionswärmepumpe 28 einen Heißgaskühler 32 auf, der das mit 208 °*C* aus dem Verdichter 29 strömende gasförmige Kältemittel zuvor auf 120 °*C* abkühlt.

Die dritte Sorptionswärmepumpe 28 weist darüber hinaus ein weiteres Verteilerventil 33auf, das aus dem zweiten Strom einen dritten Strom der auf 71 °*C* aus der Rektifikationskolonne 34 abgezogenen verarmten Lösung abteilt und durch den Heißgaskühler 32 führt. In dem Heißgaskühler 32 wird der dritte Strom durch die Wärme aus dem Kältemittel auf 117 °*C* aufgeheizt und anschließend in einem wiederum nicht dargestellten weiteren Mischventil vor dem Abscheider 35 wieder mit den anderen Teilströmen der verarmten Lösung zusammengeführt.

In dem Austreiber 36 wird die verarmte Lösung auf 86 °*C* aufgeheizt und kühlt von außen zugeführtes Wasser von 90 °*C* auf 74 °*C* ab. In dem zweiten Austreiber 37 wird die verarmte Lösung auf 97 °*C* aufgeheizt und kühlt die reiche Lösung von 101 °*C* auf 74 °*C* ab. Diese wird anschließend im Drosselventil 38 von dem Hochdruckniveau auf ein Niederdruckniveau von 2,5 *bar* entspannt und kühlt dabei weiter auf 67 °*C* ab.

Aus dem Abscheider 35 wird die arme Lösung auf 90 °*C* und das Kältemittel 84 °*C* entnommen, letzteres verlässt die Rektifikationskolonne 34 auf 67 °*C*. Die arme Lösung tritt mit 148 °*C* in den Absorber 31 ein, den die reiche Lösung mit derselben Temperatur verlässt. Die beim Absorbieren des Kältemittels im Absorber 31 anfallende Wärme heizt Hochdruckheißwasser von 145 °*C* auf 155 °*C* auf.

In den Figuren sind
- 1: Sorptionswärmepumpe (Stand der Technik)
- 2: Absorber
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Sorptionswärmepumpe
- 12: Drosselventil
- 13: Verteilerventil
- 14: Austreiber
- 15: Abscheider
- 16: zweiter Austreiber
- 17: Absorber
- 18: Lösungswärmeübertrager
- 19: Pumpe
- 20: Sorptionswärmepumpe
- 21: Drosselventil
- 22: Verteilerventil
- 23: Rektifikationskolonne
- 24: Verdichter
- 25: Absorber
- 26: Abscheider
- 27: Pumpe
- 28: Sorptionswärmepumpe
- 29: Verdichter
- 30: zweiter Verdichter
- 31: Absorber
- 32: Heißgaskühler
- 33: Verteilerventil
- 34: Rektifikationskolonne
- 35: Abscheider
- 36: Austreiber
- 37: zweiter Austreiber
- 38: Drosselventil

## Patentansprüche

1. Sorptionswärmepumpe (11, 20, 28) mit gasförmigen Kältemittel und flüssigen Lösungsmittel, einer armen und einer reichen Lösung, wobei die arme und die reiche Lösung einphasige Mischungen des Lösungsmittels und des Kältemittels sind, sowie mit einem Absorber (17, 25, 31), in dem die arme Lösung das Kältemittel absorbiert und dabei Wärme abgibt, einem Drosselventil (12, 21, 38), das die reiche Lösung nach Austritt aus dem Absorber (17, 25, 31) entspannt, einem Austreiber (14, 36), in dem die reiche Lösung nach Austritt aus dem Drosselventil (12, 21, 38) der Sorptionswärmepumpe (11, 20, 28) von außen zugeführte Wärme aufnimmt und dabei das Kältemittel austreibt, einem Verdichter (24, 29), der das Kältemittel nach Austritt aus dem Austreiber (14, 36) zum Eintritt in den Absorber (17, 25, 31) verdichtet, und einer Pumpe (19), die die arme Lösung nach Austritt aus dem Austreiber (14, 36) in den Absorber (17, 25, 31) pumpt, ***gekennzeichnet durch*** einen zweiten Austreiber (16, 37), in dem die reiche Lösung parallel zu dem Austreiber (14, 36) Wärme aus der reichen Lösung zwischen Absorber (17, 25, 31) und Drosselventil (12, 21, 38) aufnimmt.

2. Sorptionswärmepumpe (28) nach dem vorgenannten Anspruch, ***gekennzeichnet durch*** einen Heißgaskühler (32), in dem die reiche Lösung parallel zu dem Austreiber (36) Wärme aus dem Kältemittel zwischen Verdichter (29) und Absorber (31) aufnimmt.

3. Sorptionswärmepumpe (20, 28) nach einem der vorgenannten Ansprüche, ***gekennzeichnet durch*** eine Rektifikationskolonne (23, 34), in der das Kältemittel aus dem Austreiber (36) aus der reichen Lösung zwischen Drosselventil (21, 38) und Austreiber (36) zweites Kältemittel austreibt.

4. Sorptionswärmepumpe (11, 20, 28) nach einem der vorgenannten Ansprüche, ***gekennzeichnet durch*** einen Lösungswärmeübertrager (18), in dem die arme Lösung vor Eintritt in den Absorber (17, 25, 31) Wärme aus der reichen Lösung zwischen Absorber (17, 25, 31) und Drosselventil (12, 21, 38) aufnimmt.

5. Sorptionswärmepumpe (11, 20, 28) nach einem der vorgenannten Ansprüche, ***dadurch gekennzeichnet, dass*** das Lösungsmittel Wasser und das Kältemittel Ammoniak ist.

6. Sorptionskreisprozess für eine Sorptionswärmepumpe mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann die reiche Lösung erst entspannt wird, anschließend der Sorptionswärmepumpe (11, 20, 28) von außen zugeführte Wärme aufnimmt und dabei das Kältemittel austreibt, dann das Kältemittel von der reichen Lösung abgeschieden und verdichtet, und die arme Lösung gepumpt wird, ***dadurch gekennzeichnet, dass*** die reiche Lösung parallel zu der von außen zugeführten Wärme Wärme aus der reichen Lösung zwischen dem Absorbieren des Kältemittels und dem Entspannen aufnimmt.

7. Sorptionskreisprozess nach dem vorgenannten Anspruch, ***dadurch gekennzeichnet, dass*** die arme Lösung beim Absorbieren des Kältemittels die Wärme an Hochdruckheißwasser mit einer Zulauftemperatur oberhalb 100 °*C* abgibt.

8. Sorptionskreisprozess nach einem der Ansprüche 6 oder 7, ***dadurch gekennzeichnet, dass*** die von außen zugeführte Wärme durch Wasser mit einer Zulauftemperatur unterhalb 100 °*C* zugeführt wird.

## Claims

1. Sorption heat pump (11, 20. 28) with gaseous coolant and liquid solvent, an impoverished solution and an enriched solution, wherein the impoverished and enriched solution are single-phase mixtures of the solvent and the coolant, as well as with an absorber (17, 25, 31) in which the impoverished solution absorbs the coolant and thereby gives off heat, a throttle valve (12, 21, 38) which expands the enriched solution after emerging from the absorber (17, 25, 31), an ejector (14, 36) in which after emerging from the throttle valve (12, 31, 38) of the sorption heat pump (11, 20, 28) the enriched solution takes up heat supplied from outside and thereby expels the coolant, a condenser (24, 29) which condenses the coolant after emerging from the ejector (14, 36) for entry into the absorber (17, 25, 31) and a pump (19) which pumps the impoverished solution into the absorber (17, 25, 31) after emerging from the ejector (14, 36), **characterised by** a second ejector (16, 37) in which the enriched solution in parallel to the ejector (14, 36) takes up head from the enriched solution between the absorber (17, 25, 31) and the throttle valve (12, 21, 38).

2. Sorption heat pump (28) according the preceding claims **characterised by** a hot gas cooler (32) in which the enriched solution in parallel to the ejector (36) takes up heat from the coolant between the condenser (29) and the absorber (31).

3. Sorption heat pump (20, 28) according to any one of the preceding claims **characterised by** a rectification column (23, 24) in which the coolant from the ejector (36) expels a second coolant from the enriched solution between the throttle valve (21, 38) and the ejector (36).

4. Sorption heat pump (11, 20, 28) according to any one of the preceding claims **characterised by** a solution heat exchanger (18) in which before entry into the absorber (17, 25, 31) the impoverished solution takes up heat from the enriched solution between the absorber (17, 25, 31) and the throttle valve (12, 21, 38).

5. Sorption heat pump (11, 20, 28) according to any one of the preceding claims **characterised in that** the solvent is water and the coolant is ammoniac.

6. Sorption circulation process for a sorption heat pump with a gaseous coolant and a liquid solvent, an impoverished and an enriched solution, wherein the impoverished and the enriched solution are single-phase mixtures of the solvent and the coolant, and wherein the impoverished solution absorbs the coolant and thereby gives off heat, then the enriched solution is first expanded, then the sorption heat pump (11, 20, 28) takes up heat supplied from outside and thereby expels the coolant, then the coolant is separated from the enriched solution and condensed, and the impoverished solution is pumped, **characterised in that** the enriched solution in parallel to the heat supplied from outside takes up heat from the enriched solution between absorbing the coolant and expanding.

7. Sorption circulation process according to the preceding claim **characterised in that** on absorbing the coolant the impoverished solution gives off the heat to high-pressure hot water with an inlet temperature above 100°C.

8. Sorption circulation process according to any one of claims 6 or 7 **characterised in that** the head supplied from outside is supplied by water with an inlet temperature below 100°C.

## Revendications

1. Pompe à chaleur à absorption (11, 20, 28) comportant de l'agent réfrigérant gazeux et du solvant liquide, une solution pauvre et une solution riche, la solution pauvre et la solution riche étant des mélanges monophasés de solvant et d'agent réfrigérant, de même qu'un absorbeur (17, 25, 31) dans lequel la solution pauvre absorbe l'agent réfrigérant et émet alors de la chaleur, une soupape d'étranglement (12, 21, 38) qui détend la solution riche après sa sortie de l'absorbeur (17, 25, 31), un éjecteur (14, 36) dans lequel la solution riche absorbe la chaleur acheminée depuis l'extérieur après la sortie de la soupape d'étranglement (12, 21, 38) de la pompe à chaleur à absorption (11, 20, 28) et éjecte alors l'agent réfrigérant, un compresseur (24, 29) qui compresse l'agent réfrigérant après sa sortie de l'éjecteur (14, 36) pour son entrée dans l'absorbeur (17, 25, 31), et une pompe (19) qui pompe la solution pauvre après sa sortie de l'éjecteur (14, 36) dans l'absorbeur (17, 25, 31), **caractérisée par** un second éjecteur (16, 37) dans lequel la solution riche absorbe parallèlement à l'éjecteur (14, 36) de la chaleur de la solution riche entre l'absorbeur (17, 25, 31) et la soupape d'étranglement (12, 21, 38).

2. Pompe à chaleur à absorption (28) selon la revendication précédente, **caractérisée par** refroidisseur de gaz chaud (32) dans lequel la solution riche absorbe parallèlement à l'éjecteur (36) de la chaleur de l'agent réfrigérant entre le compresseur (29) et l'absorbeur (31).

3. Pompe à chaleur à absorption (20, 28) selon une des revendications précédentes, **caractérisée par** une colonne de rectification (23, 34) dans laquelle l'agent réfrigérant provenant de l'éjecteur (36) éjecte du second agent réfrigérant de la solution riche entre la soupape d'étranglement (21, 38) et l'éjecteur (36).

4. Pompe à chaleur à absorption (11, 20, 28) selon une des revendications précédentes, **caractérisée par** un échangeur de chaleur de solution (18) dans lequel la solution pauvre, avant son entrée dans l'absorbeur (17, 25, 31), absorbe de la chaleur de la solution riche entre l'absorbeur (17, 25, 31) et la soupape d'étranglement (12, 21, 38).

5. Pompe à chaleur à absorption (11, 20, 28) selon une des revendications précédentes, **caractérisée en ce que** le solvant est de l'eau et l'agent réfrigérant de l'ammoniaque.

6. Cycle d'absorption pour pompe de chaleur à absorption comportant de l'agent réfrigérant gazeux et du solvant liquide, une solution pauvre et une solution riche, la solution pauvre et la solution riche étant des mélanges monophasés de solvant et d'agent réfrigérant, et la solution pauvre absorbant l'agent réfrigérant et émettant alors de la chaleur, la solution riche étant détendue seulement à ce moment-là, absorbant ensuite de la chaleur acheminée depuis l'extérieur par la pompe à chaleur à absorption (11, 20,28) et éjectant alors l'agent réfrigérant, l'agent réfrigérant étant alors séparé de la solution riche et compressé, et la solution pauvre étant pompée, **caractérisée en ce que** la solution riche absorbe de la chaleur, parallèlement à la chaleur acheminée depuis l'extérieur, dans la solution riche entre l'absorption de l'agent réfrigérant et la détente.

7. Cycle d'absorption selon la revendication précédente, **caractérisé en ce que** la solution pauvre, lors de l'absorption de l'agent réfrigérant, émet la chaleur dans de l'eau chaude à haute pression ayant une température d'arrivée supérieure à 100 °C.

8. Cycle d'absorption selon une des revendications 6 ou 7, **caractérisé en ce que** la chaleur acheminée depuis l'extérieur est acheminée par de l'eau ayant une température d'arrivée inférieure à 100 °C.
